# EUROPÄISCHE PATENTSCHRIFT

(11) **EP 2 665 611 B1**
(45) Veröffentlichungstag und Bekanntmachung des Hinweises auf die Patenterteilung: **08.10.2014**
(21) Anmeldenummer: 12711338.9
(22) Anmeldetag: 21.02.2012
(51) Int. Cl.: B60H 1/00, F25B 45/00

(54) **SERVICEGERÄT FÜR FAHRZEUGKLIMAANLAGEN SOWIE VERFAHREN ZUR BETREIBEN DESSELBEN, INSBESONDERE ZU DESSEN SELBSTREINIGUNG**
SERVICE DEVICE FOR VEHICLE AIR CONDITIONING SYSTEMS, AND METHOD FOR OPERATING SAME, IN PARTICULAR FOR THE SELF-CLEANING OF SAME
APPAREIL D'ENTRETIEN POUR SYSTÈMES DE CLIMATISATION DE VÉHICULE ET PROCÉDÉ PERMETTANT DE FAIRE FONCTIONNER LEDIT APPAREIL, EN PARTICULIER PROCÉDÉ D'AUTONETTOYAGE DE CE DERNIER

(30) Priorität: 21.02.2011 DE 202011002986 U
(43) Veröffentlichungstag der Anmeldung: 27.11.2013
(73) Patentinhaber: Dometic Sweden AB, 171 54 Solna (SE)
(72) Erfinder: ESCH, Franz-Josef, 48477 Hörstel (DE)
(74) Vertreter: GROSSE SCHUMACHER KNAUER VON HIRSCHHAUSEN
(86) Internationale Anmeldenummer: PCT/EP2012/000753
(87) Internationale Veröffentlichungsnummer: WO 2012/113538

(56) Entgegenhaltungen:
- DE-A1- 4 319 051
- US-A1- 2006 130 510
- US-A1- 2009 188 263

## Beschreibung

### GEBIET DER ERFINDUNG

Die Erfindung betrifft ein Servicegerät für Fahrzeugklimaanlagen mit den Merkmalen des Oberbegriffs des Anspruchs 1 sowie ein Verfahren zum Betreiben desselben, insbesondere zu dessen Selbstreinigung, mit den Merkmalen des Oberbegriffs des Anspruchs 6. Demnach ist ein Servicegerät für Fahrzeugklimaanlagen mit einer Entleer- und eine Befülleinrichtung zum Absaugen des Kältemittel-/Kompressoröl-Gemisches aus dem Kältemittel-Kreislaufsystem einer Fahrzeugklimaanlage und zum Wiederauffüllen der Fahrzeugklimaanlage mit Kältemittel und Kompressoröl vorgesehen. Das Servicegerät kann mindestens einen Separator und einen Kältemittelverdichter aufweisen und umfasst in der Regel eine Kältemittelwegeeinrichtung, die insgesamt eine Trennstufe ausbilden. Eine Vakuumpumpe dient zum Restentleeren des Kältemittel-Kreislaufsystems der Fahrzeugklimaanlage. Mindestens ein druck- und/oder zeitgesteuerter Umschalt-Ventilblock dient zum wahlweisen direkten fluidischen Durchverbinden des Kältemittel-Kreislaufsystems der Fahrzeugklimaanlage mit der Trennstufe oder mit einem Wiederauffüllsystem zum Wiederbefüllen der Fahrzeugklimaanlage mit Kältemittel-/Kompressoröl-Gemisch und ggf. Additiv.

### TECHNOLOGISCHER HINTERGRUND

Service-Geräte für Fahrzeugklimaanlagen dienen unter anderem dazu, im Rahmen einer Wartung den Kältemittelkreislauf unterschiedlichster Fahrzeugklimaanlagen von Zeit zu Zeit zu entleeren und eine neue Kältemittelfüllung einzubringen. Dabei ist es erforderlich genaue Mengen und Kältemittelspezifikationen einzuhalten. Außerdem muss in vielen Fällen Schmieröl für den Kompressor des Kältemittelkreislaufs der Fahrzeugklimaanlage entfernt und wieder nachgefüllt werden. Auch dies erfolgt in vom Fahrzeugtyp bzw. Klimagerätetyp abhängigen Mengen und Spezifikationen. Manche Fahrzeugklimaanlagen benötigen außerdem ein Additiv für den Kältemittelkreislauf, welches bei einem Wartungsservice ebenfalls teilweise ausgetauscht wird. Üblicherweise gelangt das Kompressorenöl in den Kältemittelkreislauf und wird beim Betrieb der Fahrzeugklimaanlagen daher mit umgepumpt. Nur ganz bestimmte Paarungen von Kältemittel und Kompressorenöl sind für diesen Zweck miteinander verträglich. Um nach dem Absaugen des Kältemittel/Kompressorenölgemisches zumindest einen Teil des Kältemittels zur Wiederverwendung zurückgewinnen zu können, weisen Service-Geräte für Fahrzeugklimaanlagen üblicherweise auch einen Separator auf, mit welchem Kältemittel aus dem Kältemittel/Kompressorenölgemisch zur Wiederverwendung abgetrennt werden kann. Gebrauchtes Kompressorenöl sowie, gegebenenfalls, gebrauchtes Additiv wird/werden in der Regel durch das Service-Gerät aufgefangen, um, in der Regel, später verworfen zu werden.

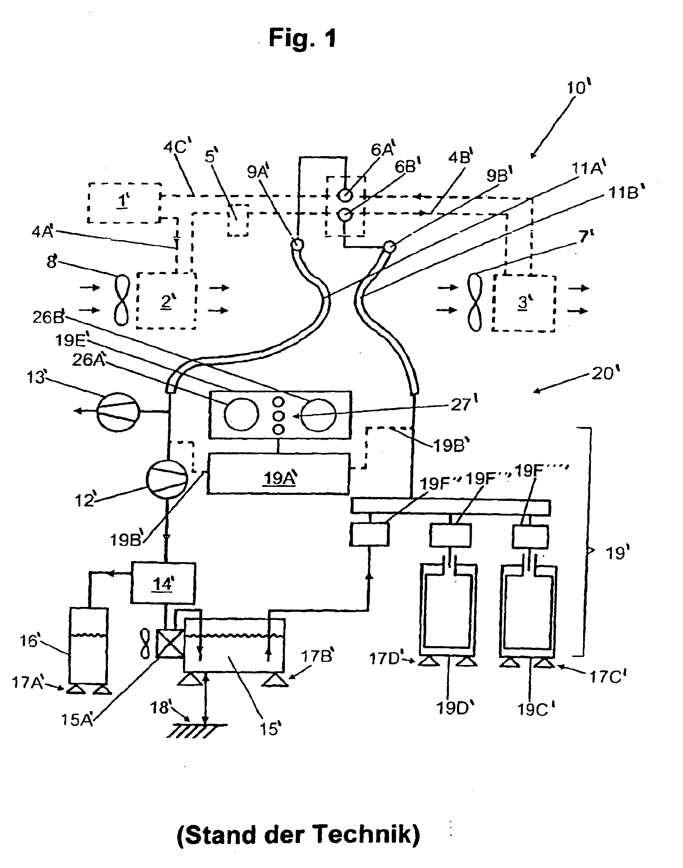

Aus der WO 2007/085480 der Anmelderin ist ein Service-Gerät für Fahrzeugklimaanlagen gemäß dem Blockschaltbild und Fig. 1 bekannt. Diese zeigt in durchgezogener Linie die wesentlichen Bestandteile des gattungsgemäßen Service-Gerätes für eine Fahrzeugklimaanlage und, in gestrichelten Linien, eine zu wartende Fahrzeugklimaanlage. Letztere besteht aus einem ölgeschmierten Kompressor 1', einem Verflüssiger 2', einen Verdampfer 3', sowie zwischen diesen Komponenten, ein geschlossenes Kühlmittelsystem herstellende Rohrleitungen 4A'-4C'. Ferner ist ein Trockner 5' vorgesehen, der auch als Sammler oder Reservoir für Kältemittel dienen kann. Schließlich sind für den Fluidaustausch zwei Serviceanschlüsse 6A'/6B' in den Kältemittelkreislauf eingebaut. Die am Verdampfer 3' zur Verfügung stehende Kälte wird durch ein Kaltluftgebläse 7' ab- und dem Fahrzeuginnenraum zugeführt. Die Kondensationswärme des Verflüssigers 2' wird durch ein Warmluftgebläse 8' abtransportiert. Service-Anschluss-Verbinder 9A' und 9B', eines Servicegerätes 20' gestatten es, im Wartungsfalle Kältemittel/Kompressoröl-Gemisch an den Serviceanschlüssen 6A', 6B' abzuziehen bzw. aufzufüllen. Die insgesamt mit 10' bezifferte Fahrzeugklimaanlage unterscheidet sich von Fahrzeugtyp zu Fahrzeugtyp und ist nicht Gegenstand der vorliegenden Erfindung.

Ein insgesamt mit 20' bezeichnetes Servicegerät für eine Fahrzeugklimaanlage weißt flexible Druckschläuche 11A', 11 B' zum Verbinden des Servicegerätes 20' mit der Fahrzeugklimaanlage 10' über die Service-Anschlussverbinder 9A', 9B' an den Serviceanschlüssen 6A', 6B' auf. Eine als Kältemittelkompressor ausgebildete Absaugpumpe 12' fördert gebrauchtes Kältemittel/Kompressoröl-Gemisch über die Druckschläuche 11A' rund 11B' und einen Separator 14'. Dieser trennt durch Verdampfen Kältemittel aus dem abgesaugten Gemisch ab und führt dies einem als Druckbehälter ausgebildeten Kältemittelvorrat 15' zu. Im Separator 14' abgeschiedenes Kompressoröl/Additiv-Gemisch wird in einem austauschbaren Altölbehälter 16' aufgefangen und mittels einer Wägeeinrichtung 17A' gewichtsmäßig erfasst. Mit dem Kältemittelvorrat 15' ist ein luftgekühlter Kältemittelverflüssiger 15A' fest verbunden. Damit wird rückgeführtes Kältemittel überwiegend in flüssiger Form dem Kältemittelvorrat 15' zugeführt. Der gesamte Kältemittelvorrat samt Verflüssiger ruht auf einer weiteren Wägeeinrichtung 17B' zum Erfassen des zu- und abgeführten sowie des vorrätigen Kältemittels. Eine Vakuumpumpe 13' sorgt nach dem Absaugen des gebrauchten Gemisches für den für das Wiederbefüllen erforderlichen Unterdruck im Kreislauf der Fahrzeugklimaanlage und gibt das abgesaugte Gasvolumen, z.B. an die Atmosphäre ab.

Ein insgesamt mit 19' bezeichnetes Wiederauffüllsystem besteht im wesentlichen aus austauschbaren Vorratsbehältem 19D' für Kompressoröl und 19C' für Additive, einer Steuereinheit 19A' mit Ventilblock und Steuerleitungen 19B', einer Femanzeige 19E' sowie Dosier- und Ventileinheiten 19F" bis 19F"". Die Vorratsbehälter 19C' und 19D' sind bevorzugt wägbar. Hierzu dienen weitere Wägeeinrichtungen 17C', 17D'.

Aus der DE 20 2008 003 123 U1 ist ein weiteres Service-Gerät für Fahrzeugklima-anlagen der Anmelderin bekannt, bei dem die Wiederbefüllbarkeit der zuvor evakuierten Fahrzeug-Klimaanlage durch eine im Kältemittel-Vorratsbehälter vorgesehene Wärmequelle zur Druckerhöhung des Kältemittels verbessert wird. Ein vergleichbares Service-Gerät für Fahrzeugklimaanlagen ist aus der US 2009/0158756A1 bekannt.

Bei einem weiteren gattungsgemäßen Servicegerät für Fahrzeugklimaanlagen der Anmelderin ist es aus der noch unveröffentlichten DE 10 2009 054 436, angemeldet am 25. November 2009, bekannt, in einer ersten Wartungsphase ein Kreislaufgemisch aus Kältemittel, Kompressorenöl sowie gegebenenfalls weiteren Gemischbestandteilen aus einer Fahrzeugklimaanlage in eine Trennstufe mittels eines Kältemittelverdichters über einen Separator abzusaugen und dabei Kältemittel mittels des Separators von dem abgesaugten Kreislaufgemisch zu trennen, zu komprimieren und aufzufangen sowie seine Menge zu bestimmen. In einer zweiten Wartungsphase wird das Kältemittel-Kreislaufsystem der Fahrzeugklimaanlage mittels einer Vakuumpumpe weitgehend restentleert. In der zweiten Wartungsphase abgepumpte Restgase werden mittels des Kältemittelverdichters durch die Trennstufe geleitet und die Menge des dabei aufgefangenen Kältemittelrestes wird bestimmt. Durch diese Maßnahme wird u. a. die Diagnose über den Zustand der Fahrzeugklimaanlage verbessert. Restgase gelangen allenfalls in gereingter Form in die Atmosphäre.

Die US 2009/0188263 A1 zeigt ein Servicegrät gemäß Oberbegriff des Anspruchs 1.

### DARSTELLUNG DER ERFINDUNG

Davon ausgehend liegt der Erfindung die Aufgabe zugrunde, ein Servicegerät für Fahrzeugklimaanlagen für eine Mehrzahl verschiedener Kältemittel-/Kompressoröl-Gemische zu ertüchtigen. Die Erfindung geht von der Erkenntnis aus, dass eine Reihe neuerer Kältemittel und/oder Kompressoröle außerordentlich sensibel auf Vermischungen mit andersartigen Kompressorölen und/oder Kältemitteln reagieren, die sich als Reste in dem Klimaservicegerät von einer vorangehenden Servicetätigkeit noch befinden können. So wurde z.B. gefunden, dass Kompressoröle für sog. Hybridfahrzeuge schon bei wenigen Prozent Zumischung anderer Kompressoröle wichtige Eigenschaften, wie eine äußerst geringe elektrische Leitfähigkeit verlieren können. In Hybridfahrzeugen werden nämlich für die Fahrzeugklimaanlagen bevorzug elektrisch betriebene Kompressoren an Stelle mechanisch von dem Antriebsmotor angetriebener Kompressoren verwendet, wobei die elektrische Betriebsspannung solcher Kompressoren vergleichsweise hoch ist. Man ist daher dazu übergegangen, für derartige Kompressoren elektrisch besonders wenig leitfähige Kompressoröle, wie Esteröl, zu verwenden, während herkömmliche Kältemittelkompressoren für Fahrzeugklimaanlagen z. B. mit sog. PAG Öl geschmiert werden. Bemühungen, durch verschiedene Arten von Spülschritten, auch bestehende Klimaservicegeräte in der Weise zu ertüchtigen, dass bei seinem Austausch das Kältemittel-/Kompressoröl-Gemisches durch Verunreinigungen oder Rückstände in dem Servicegerät aus der Verarbeitung anderer Kompressoröle nicht geschädigt wird, haben zu keinem befriedigendem Ergebnis geführt.

Zur Lösung des der Erfindung zugrunde liegenden Problems wird ein gattungsgemäßes Servicegerät für Fahrzeugklimaanlagen mit den Merkmalen des Anspruchs 1 sowie ein Verfahren mit den Merkmalen des Anspruchs 6 vorgeschlagen. Demnach ist ein evakuierbarer Spülmitteltank vorzusehen, der über eine Verbindungsleitung mit mindestens einem der Hoch- und/oder Niederdruck-Serviceanschlussverbinder des Servicegerätes und/oder den nachfolgenden Druckschläuchen und/oder dem Umschaltventilblock verbunden wird. An den Serviceanschlussverbinder schließt sich zwecks Anschlusses an die FahrzeugKlimaanlage also zumindest einer der üblichen Druckschläuche des Klimaservicegerätes und ein Umschalt-Ventilblock an. Diesem folgt eine fluidische Verbindung zu dem unter erhöhtem Kältemitteldruck stehenden Kältemittelvorrat, der, wie der Spülmitteltank, gewünschtenfalls auch außerhalb des Servicegerätes angeordnet sein kann. Es wurde gefunden, dass die fluidische Direktverbindung auf dem vorbeschriebenen Weg zwischen dem unter Unterdruck stehenden Spülmitteltank und dem unter erhöhtem Kältemitteldruck stehenden Kältemittelvorrat dazu führt, dass Kältemittel aus dem Kältemittelvorrat mit vergleichsweise großer Geschwindigkeit in den Spülmitteltank überströmt und dadurch die fluidisch verbundenen Komponenten oder Baugruppen zwischen Kältemittelvorrat und Spülmitteltank in kurzer Zeit ausreichend gründlich von Resten des zuletzt verwendeten Kältemittel-/Kompressoröl-Gemisches befreit werden, um das Servicegerät somit für eine kontaminationsfreie oder kontaminationsarme Verwendung mit einem anderen Kältemittel/Kompressoröl-Gemisch zu ertüchtigen. Das in dem Spülmitteltank aufgefangene Kältemittel kann, ggf. nach einer Nachreinigung, als Kältemittel wieder verwendet werden.

Gemäß einer bevorzugten Ausführungsform der Erfindung kann vorgesehen sein, von dem Kompressoröl, das für den nachfolgenden Service-Fall benötigt wird, eine Menge in das Leitungssystem des Servicegerätes zu injizieren. Die Menge kann relativ gering sein und z.B. 1 bis 100 ml betragen. Sie kann über das Vakkum im Spülmitteltank angesaugt werden. Dadurch wird auch die Verbindungsleitung zum Spender gespült. Damit kann das Kompressoröl aus dem zurückliegenden Service-Fall noch besser ausgetrieben werden. Hierzu ist es zweckmäßig, zunächst im Wiederauffüllsystem des Servicegerätes den Kompressoröl beinhaltenden Spender gegen einen das Kompressoröl für den folgenden Service-Fall enthaltenden Spender einzusetzen. In der Regel reicht je Selbstreinigungs-Fall eine einzige Kompressoröl-Injektion.

Nach jeder Spülung - auch nach jeder Wiederholungsspülung - des Servicegerätes mit Kältemittel und ggf. mit Kompressoröl kann der Spülmitteltank vorteilhafter Weise, insbesondere durch die Vakuumpumpe des Servicegerätes, in der Weise entleert werden, dass eingesaugte Kältemittel/Kompressoröl-Gemisch über die Vakuumpumpe einem Kältemittel/Kompressoröl-Separator des Servicegerätes zugeführt wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Servicegeräts für Fahrzeugklimaanlagen dargestellt ist. Auch einzelne Merkmale der Ansprüche oder der Ausführungsformen können mit anderen Merkmalen anderer Ansprüche und Ausführungsformen kombiniert werden.

### DETAILLIERTE BESCHREIBUNG VON AUSFÜHRUNGSBEISPIELEN

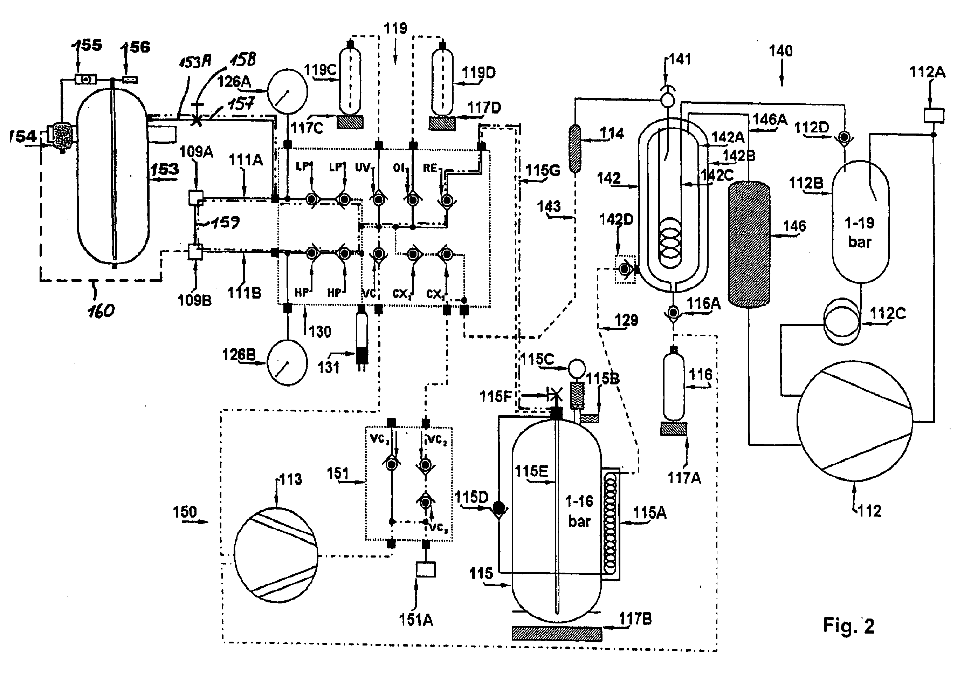

Aus dem Blockschaltbild nach Fig. 2 ergibt sich der Grundaufbau eines gattungsgemäßen Servicegerätes für Fahrzeugklimaanlagen, wobei allerdings nicht alle der dargestellten Komponenten zwingender Bestandteil der vorliegenden Erfindung sind. Demnach sind Service-Anschlussverbinder 109A, 109B zum Anschluss an den Kühlmittel-/Kompressionskreislauf einer Fahrzeugklimaanlage (hier nicht dargestellt) vorgesehen, um diese zu warten, insbesondere zu entleeren und wiederzubefüllen. Über Druckschläuche 111A, 111B besteht eine fluidische Verbindung zu einem ersten Umschalt-Ventilblock 130, dessen Funktion weiter unten erklärt wird. Der Umschalt-Ventilblock 130 ist zum Einen mit einer rechts im Bild dargestellten Trennstufe 140, die weiter unten erklärt wird, und zum Anderen (links unten im Bild) mit einer Vakuumeinheit 150, die ebenfalls weiter unten erklärt werden wird, fluidisch verbunden. Ein Niederdruckmanometer 126A und ein Hochdruckmanometer 126B am Umschalt-Ventilblock 130 dienen unter Anderem der Zustands- und Funktionskontrolle des Kühlmittel-Kompressorölkreislaufes der Fahrzeugklimaanlage. Des Weiteren ist der Umschalt-Ventilblock 130 an ein Wiederauffüllsystem 119 für Kompressoröl und Additive fluidisch angeschlossen, mit Wägeeinrichtungen 117C und 117D für Spender 119C, 119D, zum Beispiel für ein Lecksuchadditiv respektive für Frischöl. Der Systemdruck innerhalb des Umschalt-Ventilblocks 130, der nach beginnender Entleerung des Fluidkreislaufes einer Fahrzeugklimaanlage (in Fig. 2 nicht dargestellt) für die Systemsteuerung, die weiter unten erklärt wird, von Bedeutung ist, wird über einen mit einer Sammelleitung des Umschalt-Ventilblocks 130 verbundenen Drucksensor 131 überwacht, so dass der Anlagendruck, insbesondere der Kältemitteldruck der Fahrzeugklimaanlage überwacht wird, so dass unter anderem die nachfolgend erläuterten Kreislaufsysteme (Trennstufe 140 und Vakuumeinheit 150 bzw. zugehörige Ventilschaltungen) gesteuert werden können. Innerhalb des Umschalt-Ventilblocks 130 sind die dem Kreislauf der Trennstufe 140 zuzuordnenden Leitungen punktiert dargestellt. Demgegenüber sind die der Vakuumeinheit 150 zuzuordnenden Leitungen strichpunktiert dargestellt, um nachfolgend die Arbeitsphasen des Systems besser unterscheiden zu können.

Die Funktionsweise der Trennstufe 140 ist die Folgende: Nach Anschließen der Service-Anschlussverbinder 109A, 109B an die entsprechenden Ports der Fahrzeugklimaanlage und Freigabe der entsprechenden Ventile LP, HP, CX₂ des Umschalt-Ventilblocks 130, steht der Systemdruck der Fahrzeugklimaanlage zur Verfügung, um einen ersten Teil des Inhalts des Kältemittelkompressorölkreislaufes der Fahrzeugklimaanlage in die Trennstufe 140 zu überführen. Dieser Systemdruck beträgt bei 0°C bereits etwa 3 bar absolut und liegt bei etwa 20°C bereits in einer Größenordnung über 3 bar absolut, so dass die Förderung von Kältemittel-Kompressorölgemisch in die Trennstufe 140 zunächst sogar selbsttätig erfolgt. Im Übrigen wird diese Förderung durch Betreiben des Verdichters 112, wie weiter unten erläutert, unterstützt und später bei abfallendem Systemdruck weiter in Gang gehalten. Von dem Umschalt-Ventilblock 130 gelangt das Kältemittelkompressorölgemisch über einen Grobfilter 114 und ein auf etwa 3,5 bar absolut eingestelltes Konstantdruckventil 141 in einen Doppelmantelwärmeaustauscher 142, und zwar in dessen Innenbehälter 142A. Dort werden die flüchtigen Komponenten verdampft und die Gasphase gelangt über eine Leitung 146A in einen Gastrockner 146 und von dort in den Verdichter 112.

Der Doppelmantelwärmeaustauscher 142 dient gleichzeitig als Separator für flüssige Bestandteile des Kältemittel-Kompressorölgemisches, hier handelt es sich im Kern um das Kompressoröl, gegebenenfalls enthaltene Additive sowie im Kompressoröl noch gebundene Restmengen des Kältemittels. Diese Flüssigphase wird über ein Ölablassventil 116A einem Altölbehälter 116 zugeführt. Die anfallenden Mengen können über eine Wägeeinrichtung 117A, welche den Behälter mitwiegt, registriert werden.

Der Verdichter 112 sorgt dafür, dass das Kältemittel an seiner Ausgangsseite auf einen Druck von bis zu z.B. 19 bar absolut komprimiert wird. Ein Kompressornotausventil 112A begrenzt den Druck in der Regel auf 19 bar. Da das Schmieröl des Verdichters auch in das komprimierte Kältemittel gelangt, wird dieses in einem Ölseparator 112B abgetrennt und über ein Kapillarrohr 112C, das wie eine Druckdrossei wirkt, der Schmierung des Verdichters 112 wieder zugeführt. Über ein Magnetventil 112D gelangt das komprimierte, getrocknete und von Kompressoröl sowie Additiven befreite Kältemittel in eine Heizwendel 142C, die sich im Gasraum des Innenbehälters 142A des Doppelmantelwärmeaustauschers 142 befindet. Hierdurch kann die im komprimierten Kältemittel enthaltene Kompressionswärme abgegeben werden, um auf der Kaltseite das aus der Fahrzeugklimaanlage frisch ankommende Kältemittel/Kompressorölgemisch so weit wie möglich zu verdampfen. Aus der Heizwendel 142C gelangt das gereinigte (recycelte) Kältemittel zunächst in den Außenmantelbereich (Außenbehälter 142B) des Doppelmantelwärmeaustauschers 142 und von dort über einen Ventilblock 142D und einen Verbindungsschlauch 129 zum Kältemittelvorrat 115 (Vorratsbehälter). Der Vorratsbehälter wird samt Inhalt von einer Wägeeinrichtung 117B gewogen. Der Vorratsbehälter trägt auch einen Kältemittelverflüssiger 115A, der vorteilhafter Weise mit gewogen wird und in dem das unter Kompressionsdruck stehende Kältemittel kondensiert wird, um in flüssiger Form in den Kältemittelvorrat 115 zu gelangen. Sowohl der Separator 112B als auch der Kältemittelvorrat 115 sind als so genannte Druckbehälter ausgelegt. Der Druck im Kältemittelvorrat 115 wird über ein Ventil 115B gegen Überdruck gesichert, denn die sich oberhalb des Flüssigkeitsspiegels ausbildende Gasphase nicht kondensierbarer Gase muss aus Sicherheitsgründen ab einem bestimmten Überdruck von z.B. 16 bar geregelt abgelassen werden. Dies kann auch nicht automatisch über eine Handhabe 115C durch eine Bedienperson erfolgen.

Das flüssige Kältemittel gelangt über ein Rückschlagventil 115D und ein Steigrohr 115E in den Flüssigbereich des Kältemittelvorrats 115. Um die Fahrzeugklimaanlage mit Kältemittel wiederbefüllen zu können, gelangt flüssiges Kältemittel über das Steigrohr 115E, ein Ventil 115F und eine Verbindungsleitung 115G zurück in den Umschalt-Ventilblock 130.

Sobald die Fahrzeugklimaanlage soweit entleert ist, dass der Verdichter 112 auf seiner Niederdruckseite nicht mehr genügend Kältemittel-/Kompressorölgemisch ansaugen kann, was z.B. bei einem Druck 0,7 bar absolut der Fall sein kann, wird die Vakuumeinheit 150 durch Betätigen der entsprechenden Ventile in Gang gesetzt. So werden weitere Gasbestandteile aus dem Fluidkreistauf der Fahrzeugklimaanlage über die Sammelleitung des Umschalt-Ventilblocks 130 durch die Vakuumpumpe 113 angesaugt. Von der Ausgangsseite der Vakuumpumpe 113 gelangt dieses Gas oder Gasgemisch über einen (zweiten) Umschalt-Ventilblock 151 und Magnetventile VC2 zurück zum Umschalt-Ventilblock 130 und von dort in die Verbindungsleitung 143, die den Umschalt-Ventilblock 130 an die Trennstufe 140 fluidisch ankoppelt. Die von der Vakuumpumpe 113 geförderten Gasmengen aus der Fahrzeugklimaanlage werden nun in der Trennstufe 140 einschließlich Wägung genauso behandelt, wie die bei Beginn des Entleerungsprozesses selbstständig aus der Fahrzeugklimaanlage austretenden Mengen an Kältemittel-/Kompressorölgemisch. Der Unterschied zu der ersten Phase, hier als Abströmphase bezeichnet, besteht darin, dass aus der Fahrzeugklimaanlage aufgrund der vorangehenden durch den Verdichter 112 unterstützten Abströmphase keine flüssigen Bestandteile, also im wesentlichen gasförmiges Kältemittel oder ggf. Luft aus der Fahrzeugklimaanlage angesaugt werden. Dabei sind zunächst relativ große Gasmengen zu bewältigen, während gegen Ende der zweiten Phase, hier als Evakuierphase bezeichnet, die Gasmengen deutlich geringer werden. Bei einem Eingangsdruck von etwa 1 mbar oder nach Ablauf einer fest voreingestellten Prozesszeit wird der Evakuierprozess beendet.

Der von der Vakuumpumpe 113 erzeugte Gasdruck auf ihrer Ausgangsseite sollte eine Größenordnung von 2 bar absolut nicht überschreiten, um die Vakuumpumpe 113 nicht zu schädigen. Zur Druckkontrolle ist dem der Vakuumpumpe nachgeschaltete Umschalt-Ventilblock 151 ein Druckschalter 151A zugeordnet, mit dessen Hilfe, die Vakuumpumpe 113 bei Überschreiten eines Ausgangsdruckes von z.B. 2 bar abschaltet, bis der Ausgangsdruck wieder entsprechend abgesunken ist, so dass die Vakuumpumpe 113 wieder zugeschaltet werden kann.

Da das Service-Gerät nicht nur für das Absaugen und Wiederbefüllen der Fahrzeugklimaanlage im normalen Wartungsbetrieb genutzt wird, sondern auch für Reparaturfälle an Klimaanlagen, z.B. Komponentenaustausch, ist der der Vakuumpumpe 113 nachgeschaltete zweite Umschalt-Ventilblock 151 mit einem Ablassventil VC₃ ausgestattet, das z.B. in die Atmosphäre führen kann. Wenn also aus der reparierten Fahrzeugklimaanlage für nachfolgendes Wiederbefüllen lediglich Luft abgesaugt wird, gelangt diese nicht in die Trennstufe 140.

Ein evakuierbarer Spülmitteltank 153 ist über eine absperrbare Verbindungsleitung 157 und z. B. ein von Hand betriebenes oder automatisch betätigbares Absperrventil 158, in einer ersten (dargestellten) Ausführungsform, nahe der Eingangsseite des ersten Umschalt-Ventilblocks 130 an der Niederdruckseite fluidisch verbunden. Zwischen die beiden Serviceanschlussverbindem 109A und 109B ist ein an sich bekannter Koppler 159 zwecks fluidischer Durchströmverbindung eingesetzt. Die Betriebsweise ist Folgende:
Wie in strichdoppelpunktierten Linien parallel zu den Leitungen dargestellt, kann somit eine direkte Strömungsverbindung zwischen dem evakuierbaren Spülmitteltank 153 und dem Kältemittelvorrat 115 hergestellt werden. Zu diesem Zweck werden die Hochdruckventile HP und/oder die Niederdruckventile LP elektrisch, z. B. durch einen Solenoid auf Durchfluss geschaltet während die Niederdruckventile LP respektive die Hochdruckventile gewünschten Falls stromlos geschlossen sind.

Der Spülmitteltank 153 kann ggf. über einen Filter 154, ein Schauglas 155 und/oder ein Sicherheitsventile 156 sowie eine Evakuierleitung 160 auf einen gewünschten Unterdruck gebracht werden. Hierzu werden der erste und der zweite Umschalt-Ventilblock 130 und 151 zur Vakuumpumpe 113 fluidisch durchverbunden, während das Absperrventile 158 geschlossen sein kann. Durch nachfolgendes Öffnen der Ventile 115F am Ausgang des Kältemittelvorrats 115, Öffnen der Hochdruckventile HP im Umschalt-Ventilblock 130 und Öffnen des Ventils 158 in der Verbindungsleitung 157 strömt sodann Kältemittelgas oder Gas-Flüssiggemisch mit hoher Geschwindigkeit durch die kontaminationssensiblen Verbindungswege des Umschalt-Ventilblocks 130 und die Druckschläuche 111A, 111 B einschließlich durch die Serviceanschlussverbinder 109A, 109B und reinigen diese von Resten des Kompressoröl-/Additiv-Gemisches aus dem vorangehenden Servicearbeitsgang. Derartige Spülvorgänge können mehrfach wiederholt werden, um ein noch besseres Reinigungsergebnis zu erhalten.

Es ist auch möglich, die Verbindungsleitung 157 mit dem Absperrventil 158 direkt an den Hochdruck-Serviceanschlussverbinder 109B und/oder an den Niederdruck-Serviceanschlussverbinder anzuschließen, wenn die Absaugung des Kältemittel-Kompressoröl-Gemisches aus der Fahrzeugklimaanlage allein über einen oder beide der Anschlüsse erfolgen soll. Der Koppler 159 ist dann also zwingend. Gewünschtenfalls ist es aber auch möglich, parallel oder nacheinander nicht nur die Hochdruckventile HP sondern auch die Niederdruckventile LP des Umschalt-Ventilblocks in vergleichbarer Weise zu spülen, um auch diese Bereiche zu reinigen, sofern dies für die Wiederauffüllung der Fahrzeugklimaanlage bedeutsam ist. Nach erfolgtem Spülschritt wird das Absperrventil 158 geschlossen und der Koppler 159, sofern verwendet, entfernt.

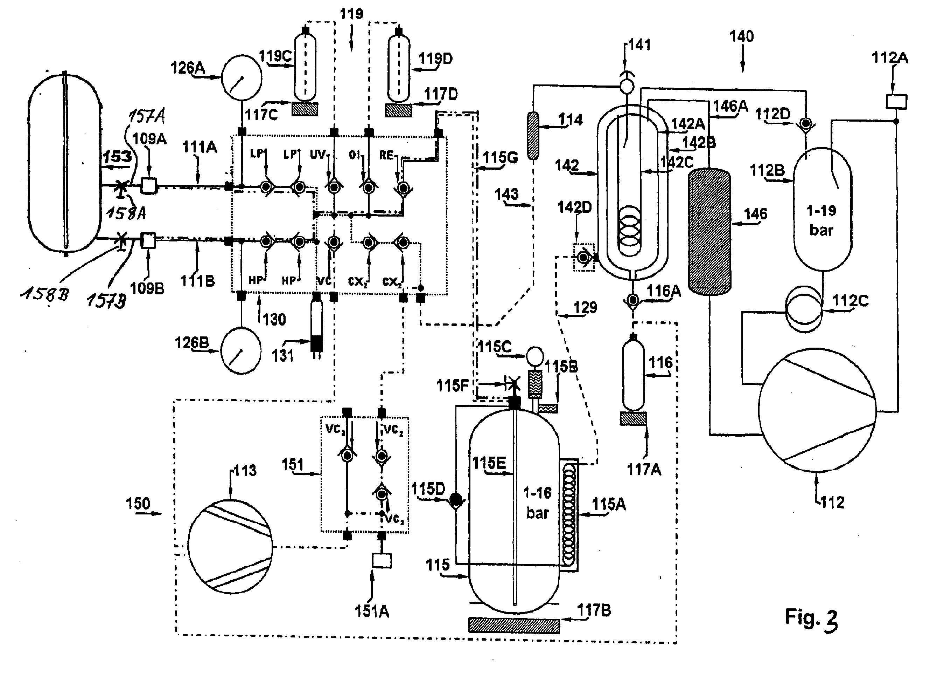

Als besonders vorteilhaft und z.B. auch einfach nachrüstbar hat sich die Ausführungsform nach Fig. 3 erwiesen. Diese sieht, abweichend von Fig.2, vor, bei einem Servicegerät mit dem ansonsten gleichen Aufbau wie nach Fig. 2, einen Spülmitteltank 153 mit zwei als Verbindungsleitungen 157A, 157B dienenden Fluiddurchlässen zu versehen, die durch Absperrventile 158A, 158B, z. B. von Hand schließbar sein können. Die Absperrventile 158A, 158B können mit sogenannten "Parkstutzen" versehen sein, mit denen die Service-Anschlussverbinder 109A, 109B zwischen zwei Service-Fällen, also bei Nichtgebrauch, verbunden werden. Im Gegensatz zum üblichen Gebrauch, werden, nach Fig. 3, die Absperrventile 158A, 158B mit den Service-Anschlussverbindern 109A, 109B allerdings fluidisch leitend dichtend verbunden. Dann dient der Spülmitteltank 153 gleichzeitig als der oben beschriebene Koppler (Koppler 159). - Auch diese Ausführungsform gestattet die mit Fig.2 beschriebene Betriebsweise.

Beide Alternativen gestatten die im einleitenden Teil beschriebene weiteren Betriebsweisen, denen gemäß die (Selbst-)Reinigung des Servicegerätes für Fahrzeug-Klimaanlagen dadurch gefördert wird, dass eine Menge von Kompressoröl, welches für den nächsten Service-Fall benötigt wird, in das Leitungssystem des Servicegerätes zu injizieren und damit das Kompressoröl aus dem zurückliegenden Service-Fall besser auszutreiben. Hierzu ist es zweckmäßig, zunächst im Wiederauffüllsystem 119 den Kompressoröl beinhaltenden Spender (119C oder 119D) gegen einen das Kompressoröl für den folgenden Service-Fall enthaltenden Spender einzusetzen. Diese Spender sind ohnehin vorzugsweise als Austausch-Spender konzipiert.

**BEZUGSZEICHENLISTE**

| | | | |
|---|---|---|---|
| 1' | Kompressor | 26A' | Niederdruckmanometer |
| 2' | Verdampfer | 26B' | Hochdruckmanometer |
| 3' | Verflüssiger | 119 | Wiederauffüllsystem |
| 4A'-C' | Rohrleitungen | 109A | Service-Anschlussverbinder |
| 5' | Abscheider | 109B | Service-Anschlussverbinder |
| 6A'/B' | Serviceanschlüsse | 111A | Druckschläuche |
| 7' | Kaltluftgebläse | 111B | Druckschläuche |
| 8' | Warmluftgebläse | 112 | Verdichter |
| 9A'/B' | Service-Anschlussverbinder | 112A | Kompressomotausventil |
| 10' | Fahrzeugklimaanlage | 112B | Ölseparator |
| 11A'/B' | Druckschläuche | 112C | Kapillarrohr |
| 12' | Absaugpumpe | 112D | Magnetventil |
| 13' | Vakuumpumpe | 113 | Vakuumpumpe |
| 14' | Separator | 114 | Grobfilter |
| 15' | Kältemittelvorrat | 115 | Kältemittelvorrat |
| 15A' | Kältemittelverflüssiger | 115A | Kältemittelverflüssiger |
| 16' | Altölbehälter | 115B | Ventil |
| 17A'-J' | Wägeeinrichtungen | 115C | Hanhabe |
| 18' | Entlastungseinrichtung | 115D | Rückschlagventil |
| 19' | Wiederauffüllsystem | 115E | Steigrohr |
| 19A' | Steuereinheit mit Ventilblock | 115F | Ventil |
| 19B' | Steuerleitungen | 115G | Verbindungsleitung |
| 19C' | Vorratsbehälter | 116 | Altölbehälter |
| 19D' | Vorratsbehälter | 116A | Ölablassventil |
| 19E' | Fernanzeige | 117A | Wägeeinrichtung |
| 19F" | Dosier- und Ventileinheit | 117B | Wägeeinrichtung |
| 19F''' | Dosier- und Ventileinheit | 117C | Wägeeinrichtung |
| 19F''' | Dosier- und Ventileinheit | 117D | Wägeeinrichtung |
| 20' | Service-Gerät | 119 | Wiederauffüllsystem |
| 119C | Spender | 143 | Verbindungsleitung |
| 119D | Spender | 146 | Gastrockner |
| 126A | Niederdruckmanometer | 146A | Leitung |
| 126B | Hochdruckmanometer | 150 | Vakuumeinheit |
| 129 | Verbindungsschlauch | 151 | zweiter Umschalt-Ventilblock |
| 130 | erster Umschalt-Ventilblock | 151A | Druckschalter |
| 131 | Drucksensor | 153 | Spülmitteltank |
| 140 | Trennstufe | 154 | Filter |
| 141 | Konstantdruckventil | 155 | Schauglas |
| 142 | Doppelmantel-Wärme- | 156 | Sicherheitsventil |
| | austauscher | 157 | Verbindungsleitung |
| 142A | Innenbehälter | 158 | Absperrventil |
| 142B | Außenbehälter | 159 | Koppler |
| 142C | Heizwendel | 160 | Evakuierleitung |
| 142D | Ventilblock | | |

## Patentansprüche

1. Service-Gerät für Fahrzeugklimaanlagen mit einer Entleer- und einer Befülleinrichtung zum Absaugen des Kältemittel-/Kompressoröl-Gemisches aus dem Kältemittel-Kreislaufsystem einer Fahrzeugklimaanlage und zum Wiederauffüllen der Fahrzeugklimaanlage mit Kältemittel und Kompressoröl mit einer Vakuumpumpe (113) zum Restentleeren des Kältemittel-Kreislaufsystems der und/oder des Service-Gerätes,
mit einem Wiederauffüllsystem (115, 119) zum Wiederbefüllen der Fahrzeugklimaanlage mit Kältemittel, Kompressoröl und ggf. Additiv,
mit einem unter erhöhtem Kältemitteldruck stehenden Kältemittelvorrat (115),
mit mit Serviceanschlussverbindern (109A, 109B) des Service-Geräts an eine zu wartende Fahrzeugklimaanlage versehenen Druckschläuchen (111A, 111 B) und
mit ansich bekannten Verbindungsleitungen
sowie, ggf., umfassend eine mindestens einen Separator und einen Kältemittelverdichter (112), und gewünschten Falls auch eine Kältemittelwägeeinrichtung umfassenden Trennstufe (140) wobei das Servicegerät mit mindestens ein druck- und/oder zeitgesteuerter Umschalt-Ventilblock (130) zum wahlweisen direkten fluidischen Durchverbinden des Kältemittel-Kreislaufsystems der Fahrzeugklimaanlage mit der Trennstufe (140) vorgesehen sein kann
**gekennzeichnet durch**
einen evakuierbaren Spülmitteltank (153) der über mindestens eine Verbindungsleitung (157; 157A, 157B) mit mindestens einem der Serviceanschlussverbinder (109A, 109B) des Service-Geräts und dem zugehörenden Druckschlauch (111A, 111B) sowie über den ggf. vorhandenen Umschalt-Ventilblock (130) mit dem unter erhöhtem Kältemitteldruck stehenden Kältemittelvorrat (115) in fluidische Strömungsverbindung bringbar ist.

2. Service-Gerät nach Anspruch 1, **dadurch gekennzeichnet, dass** der Spülmitteltank (153) mit zwei als Verbindungsleitungen (157A, 157B) dienenden Fluiddurchlässen versehen ist, mit denen die Service-Anschlussverbinder (109A, 109B) zwischen zwei Service-Fällen verbunden oder verbindbar sind.

3. Service-Gerät nach Anspruch 2, **dadurch gekennzeichnet, dass** die Verbindungsleitungen (157A, 157B) durch Absperrventile (158A, 158B) verschließbar sind.

4. Service-Gerät nach Anspruch 2 oder 3, **dadurch gekennzeichnet, dass** die Verbindungsleitungen (157A, 157B) oder die Absperrventile (158A, 158B) als Parkstutzen für die Service-Anschlussverbinder (1 09A, 109B) gestaltet sind.

5. Service-Gerät nach einem der Ansprüche 1 bis 4, **dadurch gekennzeichnet, dass** der Spülmitteltank (153) als Koppler zwischen den Service-Anschlussverbinder (109A, 109B) dient.

6. Verfahren zum Betreiben eines Servicegerätes für Fahrzeugklimaanlagen insbesondere zu dessen Selbstreinigung, wobei das Servicegerät mit einer Entleer- und einer Befülleinrichtung zum Absaugen des Kältemittel-/Kompressoröl-Gemisches aus dem Kältemittel-Kreislaufsystem einer Fahrzeugklimaanlage und zum Wiederauffüllen der Fahrzeugklimaanlage mit Kältemittel und Kompressoröl ausgestattet ist,
bei dem eine Vakuumpumpe (113) zum Restentleeren des Kältemittel-Kreislaufsystems der Fahrzeugklimaanlage und/oder des Service-Gerätes verwendet wird und
bei dem mit einem Wiederauffüllsystem (115, 119) mit einem unter erhöhtem Kältemitteldruck stehenden Kältemittelvorrat (115) die Fahrzeugklimaanlage mit Kältemittel, Kompressoröl und ggf. Additiv wiederbefüllt wird,
**dadurch gekennzeichnet, dass**
ein evakuierter oder zumindest teilevakuierter Spülmitteltank (153) direkt oder indirekt über eine Verbindungsleitung mit mindestens einem der Hochdruck-Serviceanschlussverbinder des Servicegerätes und/oder den nachfolgenden Druckschläuchen und/oder dem Umschaltventilblock verbunden wird und dass eine fluidische Weiterverbindung zu dem unter erhöhtem Kältemitteldruck stehenden Kältemittelvorrat erfolgt, so dass Kältemittel aus dem Kältemittelvorrat in den Spülmitteltank schießt oder strömt und vom Kältemittel/Kompressoröl-Gemisch des vorangehenden Service-Falls belastete Fluidleitungen und/oder -kanäle ganz oder teilweise freigespült werden.

7. Verfahren nach Anspruch 6, **dadurch gekennzeichnet, dass** von dem Kompressoröl, das für den nachfolgenden Service-Fall benötigt wird, eine Menge in das Leitungssystem des Servicegerätes injiziert wird.

8. Verfahren nach Anspruch 6 oder 7, **dadurch gekennzeichnet, dass** nach einer Spülung des Servicegerätes mit Kältemittel und ggf. mit Kompressoröl der Spülmitteltank derart entleert wird, dass das in ihn zuvor eingesaugte Kältemittel/Kompressoröl-Gemisch über die Vakuumpumpe einem Kältemittel/Kompressoröl-Separator des Servicegerätes zugeführt wird.

## Claims

1. A servicing device for vehicle air-conditioning systems with an emptying and a filling device for extracting the refrigerant/compressor oil mixture from the refrigerant circuit system of a vehicle air-conditioning system by suction and refilling the vehicle air-conditioning system with refrigerant and compressor oil, having a vacuum pump (113) for removing residue from the refrigerant circuit system of the one or more servicing device(s),
with a refilling system (115, 119) for refilling the vehicle air-conditioning system with refrigerant and compressor oil, and optionally with additive,
with a refrigerant reservoir (115) in which the refrigerant is stored under elevated pressure,
with pressure hoses (111A, 111B) furnished with service port connectors (109A, 109B) for connecting the servicing device to a vehicle air-conditioning system that is to be serviced, and
with connecting lines known *per se,*
and, optionally, comprising a separator stage (140) having at least one separator and one refrigerant compressor (112), and optionally also a refrigerant weighing device, wherein the servicing device can be provided with at least one pressure- and/or time-controlled switching valve block (130) to enable selective direct fluid communication between the refrigerant circuit system of the vehicle air-conditioning system and the separator stage (140),
**characterized by**
a tank (153) for flushing agent that can be evacuated and is able to be brought into fluid flow communication with the refrigerant reservoir (115) in which the refrigerant is stored under elevated pressure via at least one connecting line (157; 157A, 157B) having at least one of the service port connectors (109A, 109B) of the servicing device and the associated pressure hose (111A, 111B), and via the switching valve block (130) if such is present.

2. The servicing device according to claim 1, **characterized in that** the tank (153) for flushing agent is furnished with two fluid passages serving as connecting lines (157A, 157B), to which the service port connectors (109A, 109B) are or can be connected between two servicing operations.

3. The servicing device according to claim 2, **characterized in that** the connecting lines (157A, 157B) are able to be closed by shutoff valves (158A, 158B).

4. The servicing device according to either of claims 2 or 3, **characterized in that** the connecting lines (157A, 157B), or the shutoff valves (158A, 158B), are configured as parking connectors for the service port connectors (109A, 109B).

5. The servicing device according to any one of claims 1 to 4, **characterized in that** the tank (153) for flushing agent serves as a coupler between the service port connectors (109A, 109B).

6. A method for operating a servicing device for vehicle air-conditioning systems, in particular for self-cleaning thereof, wherein the servicing device is equipped with an emptying and a filling device extracting the refrigerant/compressor oil mixture from the refrigerant circuit system of a vehicle air-conditioning system by suction and refilling the vehicle air-conditioning system with refrigerant and compressor oil,
in which a vacuum pump (113) is used for removing residue from the refrigerant circuit system of the vehicle air-conditioning system and/or of the servicing device, and
in which the vehicle air-conditioning system is refilled with refrigerant, compressor oil, and optionally with additive, from a refilling system (115, 119) having a refrigerant reservoir (115) in which the refrigerant is stored under elevated pressure,
**characterized in that**
an evacuated or at least partially evacuated flushing agent tank (153) is connected directly or indirectly with at least one of the high pressure service port connectors of the servicing device and/or the subsequent pressure hoses and/or the switching valve block via a connecting line, and that a fluid further connection to the refrigerant reservoir in which the refrigerant is under elevated pressure takes place in such manner that refrigerant is discharged or flows out of the refrigerant reservoir and into the flushing agent tank, and the mixture of refrigerant and compressor oil remaining from the preceding service operation is removed partly or completely from the fluid lines and/or fluid ducts by flushing.

7. The method according to claim 6, **characterized in that** a quantity of the compressor oil that is required for the subsequent servicing operation is injected into the line system of the servicing device.

8. The method according to either of claims 6 or 7, **characterized in that** after a flushing of the servicing device with refrigerant, and optionally with compressor oil, the flushing agent tank is emptied in such manner that the refrigerant/compressor oil mixture that was sucked into it previously is forwarded to a refrigerant/compressor oil separator of the servicing device via the vacuum pump.

## Revendications

1. Appareil d'entretien pour systèmes de climatisation de véhicule comportant un dispositif de vidage et de remplissage pour aspirer le mélange fluide de refroidissement/huile de compresseur hors du système de circuit de fluide de refroidissement d'un système de climatisation de véhicule et pour remplir à nouveau le système de climatisation de véhicule en fluide de refroidissement et en huile de compresseur avec une pompe à vide (113) pour vidanger les restes du système de circuit de fluide de refroidissement du et/ou des appareils d'entretien ;
comportant un système de remplissage à nouveau (115, 119) pour remplir à nouveau le système de climatisation du véhicule an fluide de refroidissement, huile de compresseur et le cas échéant additif ;
comportant une réserve de fluide de refroidissement (115) sous une pression de fluide de refroidissement accrue,
comportant des flexibles pressurisés (111A, 111B) pourvus de connecteurs d'entretien (109A, 109B) de l'appareil d'entretien sur un système de climatisation de véhicule à entretenir et
comportant des conduites de liaison connues en soi ainsi que, le cas échéant, comprenant un gradin de séparation (140) comprenant au moins un séparateur et un compresseur de fluide de refroidissement (112), et dans un cas souhaité également un dispositif de pesage de fluide de refroidissement, dans lequel l'appareil d'entretien peut être pourvu d'au moins un bloc de soupape de commutation (130) commandé temporellement et/ou par pression à des fins d'interconnexion fluidique directe au choix du système de circuit de fluide de refroidissement du système de climatisation de véhicule avec le gradin de séparation (140),
**caractérisé par**
un réservoir de détergent évacuable (153) qui peut être amené en liaison d'écoulement fluidique par au moins une conduite de liaison (157 ; 157A ; 157B) avec au moins un connecteur d'entretien (109A, 109B) de l'appareil d'entretien et le flexible pressurisé correspondant (111A, 111B) ainsi que par l'intermédiaire du bloc de soupape de commutation (130) présent le cas échéant avec la réserve de fluide de refroidissement (115) sous une pression de fluide de refroidissement accrue.

2. Appareil d'entretien selon la revendication 1, **caractérisé en ce que** le réservoir de détergent (153) est pourvu de deux passages de fluide servant de conduites de liaison (157A, 157B), avec lesquels les connecteurs d'entretien (109A, 109B) sont reliés ou peuvent être reliés entre deux cas d'entretien.

3. Appareil d'entretien selon la revendication 2, **caractérisé en ce que** les conduites de liaison (157A, 157B) peuvent être obturées par des vannes d'arrêt (158A, 158B).

4. Appareil d'entretien selon la revendication 2 ou 3, **caractérisé en ce que** les conduites de liaison (157A, 157B) ou les vannes d'arrêt (158A, 158B) sont conçues comme des embouts de raccord pour les connecteurs d'entretien (109A, 109B).

5. Appareil d'entretien selon une des revendications 1 à 4, **caractérisé en ce que** le réservoir de détergent (153) sert de coupleur entre les connecteurs d'entretien (109A, 109B).

6. Procédé d'exploitation d'un appareil d'entretien pour des systèmes de climatisation de véhicule, notamment en vue de leur auto-nettoyage, dans lequel l'appareil d'entretien est équipé d'un dispositif de vidage et de remplissage pour aspirer le mélange fluide de refroidissement/huile de compresseur hors du système de circuit de fluide de refroidissement d'un système de climatisation de véhicule et pour remplir à nouveau le système de climatisation de véhicule avec du fluide de refroidissement et de l'huile de compresseur,
dans lequel une pompe à vide (113) pour vidanger les restes du système de circuit de fluide de refroidissement du système de climatisation du véhicule et/ou de l'appareil d'entretien est utilisée et
dans lequel le système de climatisation de véhicules est rempli à nouveau en fluide de refroidissement, huile de compresseur et le cas échéant additif à l'aide d'un système de remplissage à nouveau (115, 119) comportant une réserve de fluide de refroidissement (115) sous une pression de fluide de refroidissement accrue,
**caractérisé en ce que**
un réservoir de fluide de refroidissement (153) évacué ou au moins partiellement évacué est reliée directement ou indirectement par l'intermédiaire d'une conduite de liaison avec au moins un connecteur d'entretien à haute pression de l'appareil d'entretien et/ou les flexibles pressurisés suivants et/ou le bloc de soupape de commutation et **en ce que** une interconnexion fluidique à la réserve de fluide de refroidissement sous une pression de fluide de refroidissement accrue a lieu, de telle sorte que le fluide de refroidissement provenant de la réserve de fluide de refroidissement dans le réservoir de détergent s'épuise ou s'écoule et soit totalement ou partiellement lessivé par le mélange fluide de refroidissement/huile de compresseur des conduites et/ou canaux de fluide chargés dans le cas d'entretien précédent.

7. Procédé selon la revendication 6, **caractérisé en ce que** à partir de l'huile de compresseur, qui est nécessaire pour le cas d'entretien suivant, une quantité est injecté dans le système de conduites de l'appareil d'entretien.

8. Procédé selon la revendication 6 ou 7, **caractérisé en ce que** après un lessivage de l'appareil d'entretien avec du fluide de refroidissement et le cas échéant avec de l'huile de compresseur le réservoir de détergent est vidé de telle sorte que le mélange fluide de refroidissement/huile de compresseur précédemment aspiré dans celui-ci par l'intermédiaire de la pompe à vide soit introduit dans un séparateur fluide de refroidissement/huile de compresseur de l'appareil d'entretien.
